# EUROPEAN PATENT APPLICATION

(11) **EP 2 957 755 A1**
(43) Date of publication of application: **23.12.2015**
(21) Application number: 15172807.8
(22) Date of filing: 18.06.2015
(51) Int. Cl.: F02K 3/075, F02C 6/06, F02C 7/04, B64D 33/02

(54) **NACELLE AIR SCOOP ASSEMBLY**

(30) Priority: 18.06.2014 US 201462013880 P
(71) Applicant: United Technologies Corporation, Hartford, CT 06101 (US)
(72) Inventor: FEIEREISEN, John M., South Windsor, CT 06074 (US)
(74) Representative: Hall, Matthew Benjamin

(57) **Abstract**

An air scoop assembly (72) that may be for a nacelle (60) of a turbofan engine (20) includes a surface (84) defining at least in-part a primary flowpath and a hood (74) formed to the surface and projecting into the primary flowpath. The hood includes a distal, leading, edge (82) that is irregular in shape thereby producing air vortices that shed from the leading edge and co-extend in a downstream direction with an airstream in the primary flowpath. The vortices are thereby controlled such that air flow disruption and undesired resonance is minimized or eliminated.

## Description

### BACKGROUND

The present disclosure relates to gas turbine engines, and more particularly to an air scoop assembly in a nacelle of the gas turbine engine and method of operating.

Air scoops are known to project into a primary air flowpath for redirecting a portion of the air flow to serve a particular purpose such as cooling of components in a remote region. One example of such air scoops are those that project into a bypass air flowpath of a nacelle for a turbofan engine often called ram scoops. Unfortunately, the air scoops are known to disrupt efficient airstream flow. This disruption is further aggravated where air scoop assemblies include valves that intermittently limit or prevent diversion of air flow through the air scoop assembly.

For example, with a valve of the air scoop assembly closed, flow spills around the ram scoop and tends to separate off a leading edge of the scoop or hood. With traditional, uniform, edge contours, this separation may result in the shedding of a coherent vortex spanning the full width of the ram scoop. This type of shedding may couple with the natural frequency of the ducting between the ram scoop inlet lip and the valve controlling the flow. This resonance may produce significant unsteady pressures resulting in elevated noise and/or elevated unsteady stresses in surrounding structures.

### SUMMARY

An air scoop assembly configured to mount to a surface defining a primary flow path, the assembly according to one, non-limiting embodiment of the present disclosure includes a hood having an irregular upstream edge and configured to project into the primary flowpath.

Additionally to the foregoing embodiment, the edge is at least one vortex generator.

In the alternative or additionally thereto, in the foregoing embodiment, the edge is scalloped.

In the alternative or additionally thereto, in the foregoing embodiment the air scoop assembly includes an air duct having an inlet defined at least by the surface and the edge.

In the alternative or additionally thereto, in the foregoing embodiment, the air duct defines a secondary flowpath in fluid communication with the primary flowpath and for the intermittent flow of air from the primary flowpath.

In the alternative or additionally thereto, in the foregoing embodiment the air scoop assembly includes a valve configured for the intermittent isolation of the secondary flowpath.

In the alternative or additionally thereto, in the foregoing embodiment, the valve includes a closed position and an open position and the at least one vortex generator forms at least one vortex that breaks up any coherent shedding off of air flow from the hood when the valve is in the closed position.

In the alternative or additionally thereto, in the foregoing embodiment, the edge has at least one apex projecting in an upstream direction and into the primary flowpath.

In the alternative or additionally thereto, in the foregoing embodiment, the edge has at least one apex projecting into an upstream direction and into the primary flowpath.

In the alternative or additionally thereto, in the foregoing embodiment, the hood is flush with the surface.

In the alternative or additionally thereto, in the foregoing embodiment, the hood projects transversely into the primary flowpath and outward from the surface.

In the alternative or additionally thereto, in the foregoing embodiment, the surface is carried by a nacelle.

In the alternative or additionally thereto, in the foregoing embodiment, the apex projects upstream by a downstream-most portion of the edge by a distance that is about twice a thickness of the hood.

In the alternative or additionally thereto, in the foregoing embodiment, the at least one apex is spaced from a next adjacent apex by a distance that is about one fifth to about one half a height of the hood.

A nacelle for a gas turbine engine according to another, non-limiting, embodiment includes a fan cowling concentrically disposed to an engine axis and surrounding a fan section of the gas turbine engine; a core cowling concentrically disposed to the engine axis and located downstream of the fan section with an annular air bypass flowpath defined between and by the fan and core cowlings; and a hood formed to the core cowling and projecting into the bypass flowpath, the hood including a leading edge that includes at least one apex projecting in an upstream direction and acting as at least one vortex generator.

Additionally to the foregoing embodiment, the nacelle includes an air duct having an inlet defined at least by the core cowling and the edge; and wherein the air duct defines a secondary flowpath in fluid communication with the bypass flowpath and for the intermittent flow of air from the bypass flowpath.

In the alternative or additionally thereto, in the foregoing embodiment the nacelle includes a valve in the air duct for the intermittent isolation of the secondary flowpath; and wherein the valve includes a closed position and an open position and the at least one vortex generator forms at least one vortex that breaks up any coherent shedding off of air flow from the hood when the valve is in the closed position.

In the alternative or additionally thereto, in the foregoing embodiment, the hood is flush with the core cowling.

In the alternative or additionally thereto, in the foregoing embodiment, the hood projects transversely into the bypass flowpath and radially outward from the core cowling.

A method of operating an air scoop assembly according to another, non-limiting, embodiment includes the steps of substantially closing the air scoop assembly having a hood that projects into a primary air flowpath; and forming at least one air vortex that stems from an irregular leading edge of a hood of the air scoop assembly and extends in a substantially downstream direction thereby minimizing disruption of airstreams in the primary air flowpath.

The foregoing features and elements may be combined in various combination without exclusivity, unless expressly indicated otherwise. These features and elements as well as the operation thereof will become more apparent in light of the following description and the accompanying drawings. It should be understood, however, the following description and figures are intended to exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a schematic cross section of a gas turbine engine;
FIG. 2 is a partial perspective view of the engine viewing in an upstream direction;
FIG. 3 is a side view of an air scoop assembly;
FIG. 4 is a perspective view of a hood of the air scoop assembly; and
FIG. 5 is a cross section of a leading edge of the hood taken along line 5-5 of FIG. 4.

### DETAILED DESCRIPTION

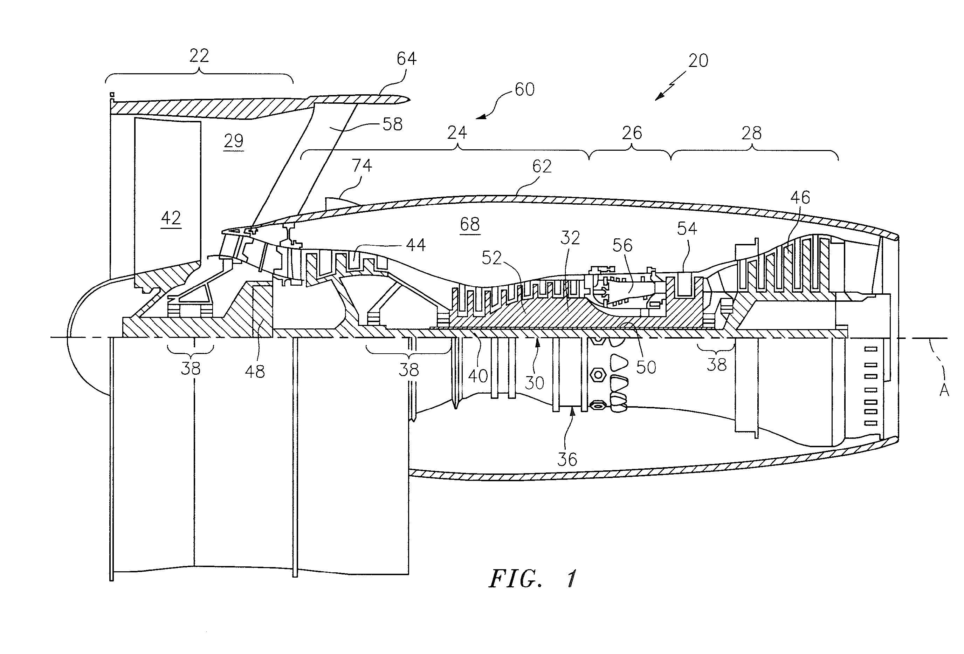

FIG. 1 schematically illustrates a gas turbine engine 20 disclosed as a two-spool turbo fan that generally incorporates a fan section 22, a compressor section 24, a combustor section 26 and a turbine section 28. The fan section 22 drives air along a bypass or primary flowpath 29 while the compressor section 24 drives air along a core flowpath for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbine engine architecture such as turbojets, turboshafts, three-spool turbofans, land-based turbine engines, and others.

The engine 20 generally includes a low spool 30 and a high spool 32 mounted for rotation about an engine axis A via several bearing structures 38 and relative to a static engine case 36. The low spool 30 generally includes an inner shaft 40 that interconnects a fan 42 of the fan section 22, a low pressure compressor 44 ("LPC") of the compressor section 24 and a low pressure turbine 46 ("LPT") of the turbine section 28. The inner shaft 40 drives the fan 42 directly, or, through a geared architecture 48 to drive the fan 42 at a lower speed than the low spool 30. An exemplary reduction transmission may be an epicyclic transmission, namely a planetary or star gear system.

The high spool 32 includes an outer shaft 50 that interconnects a high pressure compressor 52 ("HPC") of the compressor section 24 and a high pressure turbine 54 ("HPT") of the turbine section 28. A combustor 56 of the combustor section 26 is arranged between the HPC 52 and the HPT 54. The inner shaft 40 and the outer shaft 50 are concentric and rotate about the engine axis A. Core airflow is compressed by the LPC 44 then the HPC 52, mixed with the fuel and burned in the combustor 56, then expanded over the HPT 54 and the LPT 46. The LPT 46 and HPT 54 rotationally drive the respective low spool 30 and high spool 32 in response to the expansion.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3:1, and in another example is greater than about 2.5:1. The geared turbofan enables operation of the low spool 30 at higher speeds that can increase the operational efficiency of the LPC 44 and LPT 46 and render increased pressure in a fewer number of stages.

A pressure ratio associated with the LPT 46 is pressure measured prior to the inlet of the LPT 46 as related to the pressure at the outlet of the LPT 46 prior to an exhaust nozzle of the gas turbine engine 20. In one non-limiting example, the bypass ratio of the gas turbine engine 20 is greater than about ten (10:1); the fan diameter is significantly larger than the LPC 44; and the LPT 46 has a pressure ratio that is greater than about five (5:1). It should be understood; however, that the above parameters are only exemplary of one example of a geared architecture engine and that the present disclosure is applicable to other gas turbine engines including direct drive turbofans.

In one non-limiting example, a significant amount of thrust is provided by the bypass flowpath 29 due to the high bypass ratio. The fan section 22 of the gas turbine engine 20 is designed for a particular flight condition - typically cruise at about 0.8 Mach and about 35,000 feet (10,668 meters). This flight condition, with the gas turbine engine 20 at its best fuel consumption, is also known as Thrust Specific Fuel consumption (TSFC). TSFC is an industry standard parameter of fuel consumption per unit of thrust.

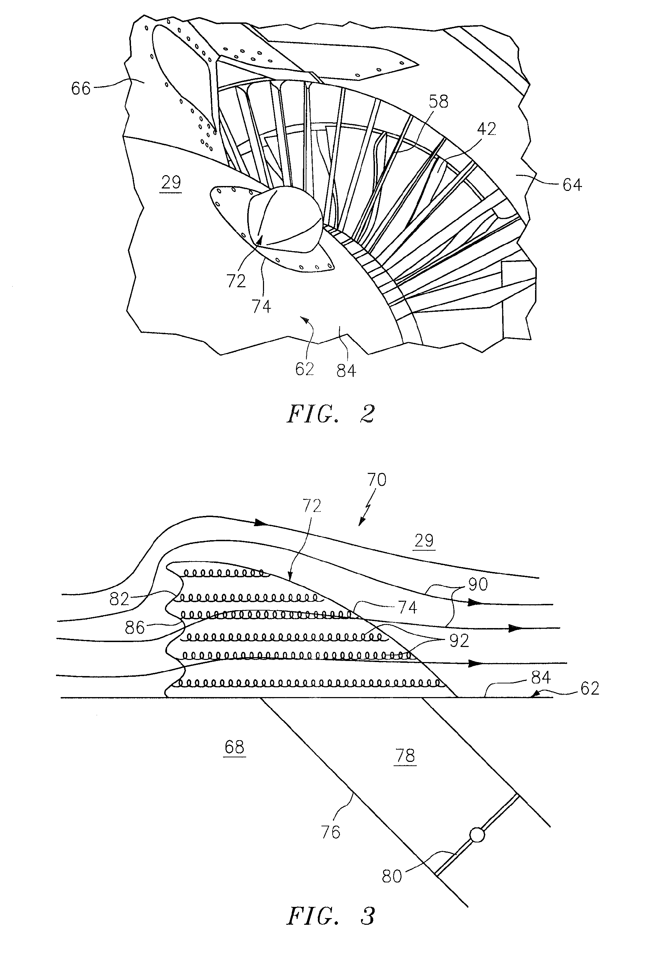

Fan Pressure Ratio is the pressure ratio across a blade of the fan section 22 without consideration of the effect of a fan exit guide vane assembly 58 located downstream of the fan 42 (also see FIG. 2). The low Fan Pressure Ratio according to one, non-limiting, example of the gas turbine engine 20 is less than 1.45:1. Low Corrected Fan Tip Speed is the actual fan tip speed divided by an industry standard temperature correction of (T/518.7^{0.5}), where "T" represents the ambient temperature in degrees Rankine. The Low Corrected Fan Tip Speed according to one non-limiting example of the gas turbine engine 20 is less than about 1150 fps (351 m/s).

Referring to FIGS. 1 and 2, a nacelle assembly 60 of the turbine engine 20 has core cowling 62, a fan cowling 64 and a pylon 66. The core and fan cowlings 62, 64 are generally concentric to the engine axis A with the core cowling 62 generally supporting the core engine and surrounding the engine sections 24, 26, 28. The fan cowling 64 is spaced radially outward from the core cowling 62 and surrounds the fan 42 and guide vane assembly 58. The annular bypass flow path 29 is defined between and by the core and fan cowlings 62, 64. The pylon 66 may be attached to both cowlings 62, 64 and generally supports and attaches the entire engine 20 to, for example, an aircraft (not shown).

Referring to FIGS. 1 through 3, an annular engine cavity 68 is located radially between and may be defined by the core cowling 62 and the inner engine case 36. Various engine components (not shown) may be generally located in the cavity 68 and may require cooling by a ventilation or air cooling system 70 through a series of tube and hoses directed to the component and/or otherwise ventilate the cavity 68 to prevent the accumulation of fumes. Cooling system 70 may include an air scoop assembly 72 having a hood 74 mounted to the core cowling 62 (as one example) and projecting into the bypass flowpath 29 for receipt of a secondary airflow. In some examples of the cooling system 70, the amount of secondary airflow is dependent mainly upon the pressure difference between the bypass flowpath 29 and the ambient air, and other systems may include control logic with associated flow control valve(s).

One, non-limiting, example of such an air cooling system 70, is an Active Clearance Control (ACC) cooling system 70 that assists in the control of a blade tip clearance between the engine case 36 and the tips of the rotating blades of the turbine section 28. More specifically, the ACC cooling system 70 adjusts cooling flow to the engine case 36 thereby controlling thermal expansion of the case relative to centrifugal and thermal expansion of the turbine rotor thereby minimizing and/or controlling the blade tip clearance throughout varying engine operating conditions.

The air scoop assembly 72 of the ACC cooling system 70 includes the hood 74, a duct 76 defining a secondary air flowpath 78, and a flow control device or at least one valve 80 that intersects the duct 76 for controlling the amount of secondary air flow. The hood 74 has a contoured or scalloped leading edge 82 that, with a radially outward facing surface 84 of the core cowling 62, defines an inlet 86 of the secondary air flowpath 78. It is further contemplated and understood that the air scoop assembly 72 may be generally mounted on any surface that defines at least in-part a primary air flowpath and where the retrieval of a secondary air flow is required.

In operation, and with the flow control device 80 in a substantially open position, bypass air flows generally in an axially downstream direction (see the bypass airstreams shown as arrows 90 in FIG. 3) along the bypass flowpath 29. Λ portion of this bypass air is scooped-up by the hood 74 of the air scoop assembly 72 and flows through or along the secondary air flowpath 78. With the flow control device 80 substantially open, no (or minimal) air vortices are created about the hood which could hinder efficient flow of the bypass airstreams 90. Absent the features of the present disclosure, with the flow control device closed or substantially closed, no (or minimal) secondary air flows through the secondary air flowpath and the hood of the air scoop assembly may function more as an airstream obstruction in the bypass flowpath. As such and in more traditional designs, air vortices or disturbances may be created that undesirably disrupt the bypass airstreams 90, reduce airflow efficiency, and lead to undesired resonance that may produce significant unsteady pressures resulting in elevated noise and elevated unsteady stresses in surrounding structures, if not properly controlled.

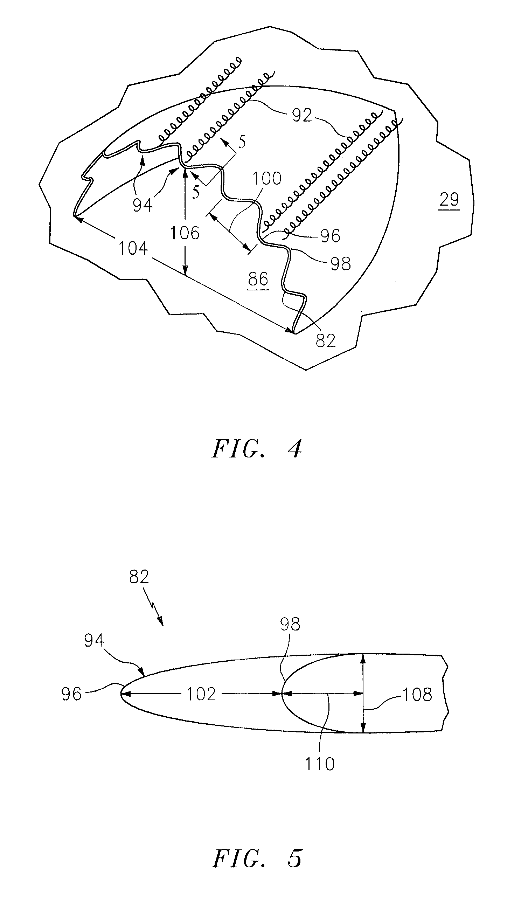

Referring to FIGS. 3 and 4, the irregular or scalloped shape of the leading edge 82 of the hood 74 generally functions as a plurality of vortex generators that create, controlled, air vortices 92 generally when the flow control device 80 is closed, and which stem from the leading edge 82 of the hood 74 and generally co-extend in the downstream direction with the bypass airstreams 90 thereby minimizing any disruption of the bypass air flow. That is, with the flow control device 80 generally closed, there is a continuous shedding of streamwise vorticity. The "continuous shedding" is desirable over discontinuous or periodic shedding because it eliminates the production of undesired resonance that produce excessive noise in the duct and stress upon surrounding structure. That is, the irregular or non-uniform edge 82 avoids the tendancy to shed a full-width coherent vortex and avoids any coupling with the natural frequency of the cowlings 62, 64. In addition to breaking up any full-width coherent vortex, with the valve 80 closed, the non-uniform edge 82 acts as vortex generators in the flow spilling around the edge, shedding continuous, streamwise, vorticity and reducing any flow separation in the bypass air flowpath 29 downstream of the hood 74. It is further understood and contemplated that the irregular shape of the leading edge may not be scalloped but may take the form of any variety of shapes that may produce air vortices as described.

Referring to FIGS. 4 and 5, the irregular shape of the leading edge 82 may be a plurality of scallops 94 (i.e. each scallop generally being one vortex generator). Each scallop 94 meets the next adjacent scallop at an apex or convex portion 96 that generally projects and substantially faces in an upstream direction, and which contributes toward the shedding of the air vortices 92. Each apex 96 is spaced from the next adjacent apex by a distance 100. Each scallop 94 also has a concave portion 98 that substantially faces in the upstream direction and is generally spaced axially (with respect to the engine axis A) from the apex 96 by a distance 102. The hood 74 has a width 104 measured between the joinder(s) of the hood 74 to the surface 84 of the core cowling 62, and a height 106 that is generally the maximum projection of the hood into the bypass air flowpath 29 (i.e. maximum radial distance from the surface 84 to the hood 74). The width 104 is substantially greater than the height 106, and the height 106 is generally two to five times greater than the distance 100 between apexes 96.

Axially downstream of the leading edge 82, the hood 74 has a general thickness 108 and the concave portion 98 may have a parabolic shaped cross section that generally begins where the hood has the thickness 108 and projects upstream to a vertex by a distance 110 that may be substantially equal to thickness 108. The apex or convex portion 96 may have a parabolic shaped cross section similar to the concave portion 98 but generally more pointed (i.e. more tapered). The distance 102 between the apex 96 and the concave portion 98 may be about equal to twice the thickness 108.

It is understood that relative positional terms such as "forward," "aft," "upper," "lower," "above," "below," and the like are with reference to the normal operational attitude and should not be considered otherwise limiting. It is also understood that like reference numerals identify corresponding or similar elements throughout the several drawings. It should be understood that although a particular component arrangement is disclosed in the illustrated embodiment, other arrangements will also benefit. Although particular step sequences may be shown, described, and claimed, it is understood that steps may be performed in any order, separated or combined unless otherwise indicated and will still benefit from the present disclosure.

The foregoing description is exemplary rather than defined by the limitations described. Various non-limiting embodiments are disclosed; however, one of ordinary skill in the art would recognize that various modifications and variations in light of the above teachings will fall within the scope of the appended claims. It is therefore understood that within the scope of the appended claims, the disclosure may be practiced other than as specifically described. For this reason, the appended claims should be studied to determine true scope and content.

The following clauses set out features of the present disclosure which may or may not presently be claimed in this application but which may form the basis for future amendment or a divisional application.
1. An air scoop assembly configured to mount to a surface defining a primary flow path, the air scoop assembly comprising:
   a hood having an irregular upstream edge and configured to project into the primary flowpath.
2. The air scoop assembly set forth in clause 1, wherein the edge is at least one vortex generator.
3. The air scoop assembly set forth in clause 2, wherein the edge is scalloped.
4. The air scoop assembly set forth in clause 2 further comprising:
   an air duct having an inlet defined at least by the surface and the edge.
5. The air scoop assembly set forth in clause 4, wherein the air duct defines a secondary flowpath in fluid communication with the primary flowpath and for the intermittent flow of air from the primary flowpath .
6. The air scoop assembly set forth in clause 5 further comprising:
   a valve configured for the intermittent isolation of the secondary flowpath.
7. The air scoop assembly set forth in clause 6, wherein the valve includes a closed position and an open position and the at least one vortex generator forms at least one vortices that breaks up any coherent shedding off of air flow from the hood when the valve is in the closed position.
8. The air scoop assembly set forth in clause 2, wherein the edge has at least one apex projecting in an upstream direction and into the primary flowpath.
9. The air scoop assembly set forth in clause 7, wherein the edge has at least one apex projecting into an upstream direction and into the primary flowpath.
10. The air scoop assembly set forth in any preceding clause, wherein the hood is flush with the surface.
11. The air scoop assembly set forth in clause 9, wherein the hood projects transversely into the primary flowpath and outward from the surface.
12. The air scoop assembly set forth in clause 9, wherein the surface is carried by a nacelle.
13. The air scoop assembly set forth in clause 8, wherein the apex projects upstream by a downstream-most portion of the edge by a distance that is about twice a thickness of the hood.
14. The air scoop assembly set forth in clause 8, wherein the at least one apex is spaced from a next adjacent apex by a distance that is about one fifth to about one half a height of the hood.
15. A nacelle for a gas turbine engine comprising:
   a fan cowling concentrically disposed to an engine axis and surrounding a fan section of the gas turbine engine;
   a core cowling concentrically disposed to the engine axis and located downstream of the fan section with an annular air bypass flowpath defined between and by the fan and core cowlings; and
   a hood formed to the core cowling and projecting into the bypass flowpath, the hood including a leading edge that includes at least one apex projecting in an upstream direction and acting as at least one vortex generator.
16. The nacelle set forth in clause 15 further comprising:
   an air duct having an inlet defined at least by the core cowling and the edge; and
   wherein the air duct defines a secondary flowpath in fluid communication with the bypass flowpath and for the intermittent flow of air from the bypass flowpath.
17. The nacelle set forth in clause 16 further comprising:
   a valve in the air duct for the intermittent isolation of the secondary flowpath; and
   wherein the valve includes a closed position and an open position and the at least one vortex generator forms at least one vortex that breaks up any coherent shedding off of air flow from the hood when the valve is in the closed position.
18. The nacelle set forth in clause 15, wherein the hood is flush with the core cowling.
19. The nacelle set forth in clause 15, wherein the hood projects transversely into the bypass flowpath and radially outward from the core cowling.
20. A method of operating an air scoop assembly comprising the steps of:
   substantially closing the air scoop assembly having a hood that projects into a primary air flowpath; and
   forming at least one air vortex that stems from an irregular leading edge of a hood of the air scoop assembly and extends in a substantially downstream direction thereby minimizing disruption of airstreams in the primary air flowpath.

## Claims

1. An air scoop assembly (72) configured to mount to a surface (84) defining a primary flow path, the air scoop assembly comprising:
a hood (74) having an irregular upstream edge (82) and configured to project into the primary flowpath.

2. The air scoop assembly set forth in claim 1, wherein the edge is at least one vortex generator.

3. The air scoop assembly set forth in claim 1 or 2, wherein the edge is scalloped (94).

4. The air scoop assembly set forth in any preceding claim further comprising:
an air duct having an inlet defined at least by the surface and the edge, preferably wherein the air duct defines a secondary flowpath in fluid communication with the primary flowpath and for the intermittent flow of air from the primary flowpath, further preferably comprising:
a valve (80) configured for the intermittent isolation of the secondary flowpath, further preferably wherein the valve includes a closed position and an open position and the at least one vortex generator forms at least one vortices that breaks up any coherent shedding off of air flow from the hood when the valve is in the closed position.

5. The air scoop assembly set forth in any preceding claim, wherein the edge has at least one apex (96) projecting in an upstream direction and into the primary flowpath.

6. The air scoop assembly set forth in any preceding claim, wherein the hood is flush with the surface and/or wherein the hood projects transversely into the primary flowpath and outward from the surface.

7. The air scoop assembly set forth in any preceding claim, wherein the apex projects upstream by a downstream-most portion of the edge by a distance that is about twice a thickness of the hood.

8. The air scoop assembly set forth in any preceding claim, wherein the at least one apex is spaced from a next adjacent apex by a distance that is about one fifth to about one half a height of the hood.

9. The air scoop assembly set forth in any preceding claim, wherein the surface is carried by a nacelle (60), preferably wherein the nacelle comprising:
a fan cowling (64) concentrically disposed to an engine axis (A) and surrounding a fan section (22) of the gas turbine engine; and
a core cowling (62) concentrically disposed to the engine axis and located downstream of the fan section with the primary flow path in the form of an annular air bypass flowpath defined between and by the fan and core cowlings.

10. A nacelle (60) for a gas turbine engine (20) comprising:
a fan cowling (64) concentrically disposed to an engine axis (A) and surrounding a fan section (22) of the gas turbine engine;
a core cowling (62) concentrically disposed to the engine axis and located downstream of the fan section with an annular air bypass flowpath defined between and by the fan and core cowlings; and
a hood (74) formed to the core cowling and projecting into the bypass flowpath, the hood including a leading edge (82) that includes at least one apex (96) projecting in an upstream direction and acting as at least one vortex generator.

11. The nacelle set forth in claim 10 further comprising:
an air duct having an inlet defined at least by the core cowling and the edge; and
wherein the air duct defines a secondary flowpath in fluid communication with the bypass flowpath and for the intermittent flow of air from the bypass flowpath, preferably further comprising:
a valve (80) in the air duct for the intermittent isolation of the secondary flowpath; and
wherein the valve includes a closed position and an open position and the at least one vortex generator forms at least one vortex that breaks up any coherent shedding off of air flow from the hood when the valve is in the closed position.

12. The nacelle set forth in claim 10 or 11, wherein the hood is flush with the core cowling and/or wherein the hood projects transversely into the bypass flowpath and radially outward from the core cowling.

13. The nacelle set forth in any of claims 10 to 12, wherein the leading edge of the hood is scalloped (94).

14. The nacelle set forth in any of claims 10 to 13, wherein the apex projects upstream by a downstream-most portion of the edge by a distance that is about twice a thickness of the hood and/or wherein the at least one apex is spaced from a next adjacent apex by a distance that is about one fifth to about one half a height of the hood.

15. A method of operating an air scoop assembly comprising the steps of:
substantially closing the air scoop assembly (72) having a hood (74) that projects into a primary air flowpath; and
forming at least one air vortex that stems from an irregular leading edge (82) of a hood of the air scoop assembly and extends in a substantially downstream direction thereby minimizing disruption of airstreams in the primary air flowpath.
